# EUROPEAN PATENT APPLICATION

(11) **EP 2 735 977 A1**
(43) Date of publication of application: **28.05.2014**
(21) Application number: 12290406.3
(22) Date of filing: 21.11.2012
(51) Int. Cl.: G06F 17/30

(54) **Media cloud copyless message passing**

(71) Applicant: Alcatel Lucent, 75007 Paris (FR)
(72) Inventor: Sienel, Juergen, 71229 Leonberg (DE); Bauer, Markus, 91257 Pegnitz (DE)
(74) Representative: Wetzel, Emmanuelle

(57) **Abstract**

A method for sending a message (8) that resides in a buffer (9) between at least one out of a plurality of sending components and at least one out of a plurality of receiving components of a cloud computing environment (1) comprising a plurality of nodes (A, B, C), wherein the sending components and the receiving components are executable on the nodes (A, B, C), the method comprising steps of:
(a) adding a unique content identifier (10) to the message (8) to provide unique identification for the message (8);
(b) generating a receiver list comprising components (2-7) that are allowed to use the message (8); and
(c) forwarding a buffer pointer to each component (2-7) of the receiver list for enabling further handling of the message (8);

a cloud execution environment, in particular for use in the cloud computing environment (1), comprising a service router (11), provided for identifying for each message (8) potential receiving components and their location in the cloud computing environment (1), a network interface handling unit (12), provided for adding a unique content identifier (10) to a message (8) of the plurality of messages to provide unique identification for the message (8), a component scheduler (13), provided for forwarding a buffer pointer to each component of the receiver list for enabling further handling of the message (8), and a queue management unit (14), provided for generating receiver lists of components allowed to use a message (8) of the plurality of messages;
a software module (15) that is executable by a cloud execution environment, for controlling an execution of steps of such a method.

## Description

The invention relates to a method for sending a message within a distributed computing environment, an execution environment provided for executing the method, and a software module for controlling an execution of the method.

### BACKGROUND ART

Cloud computing is the use of computing resources including hardware and software, wherein the computing resources are delivered as a service over a network, for instance the Internet, from a distributed computing environment.

It is known to employ a cloud execution environment for forwarding messages between components that is running distributed on all nodes belonging to the same cloud infrastructure, the Media Cloud. As opposed to dedicated (virtual) network connection used in traditional cloud environments, media cloud components do not establish the communication channel itself. An individual component does not comprise any information about another component that is its successor in operating on the media stream the individual component sends out.

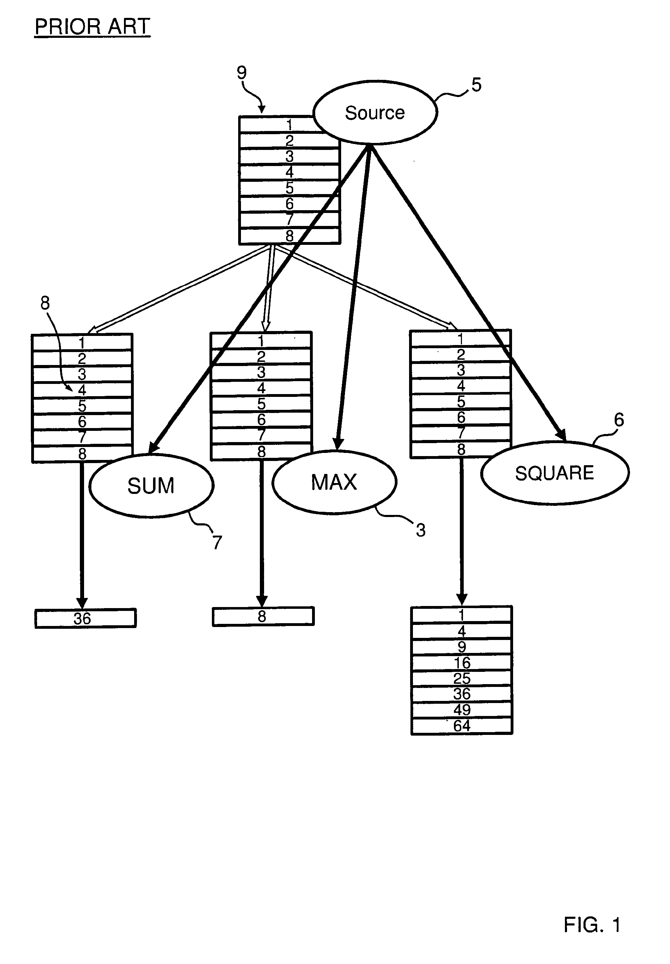

A prior art method of explicit message copying between components executed on a single node is shown in Fig. 1. The message 8 resides in a buffer 9. Individual copies of the buffer 9 are sent out to each one of a number of various components 3, 6, 7 that are provided to use the message 8 to carry out specific computing functions. Obviously, the method requires a maximum data flow.

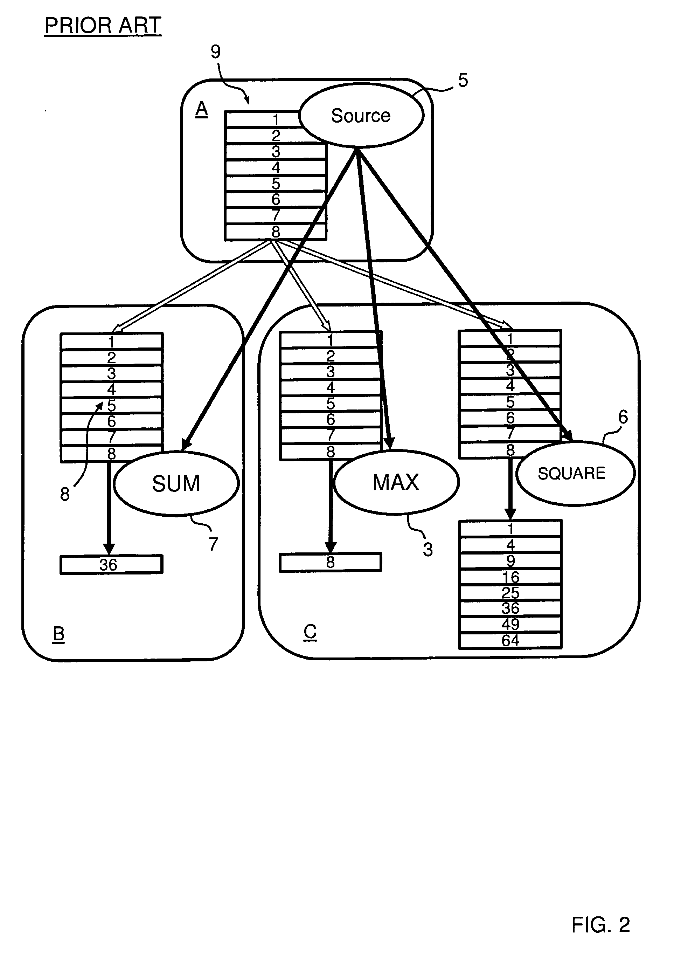

Fig. 2 illustrates prior art message copying between components 3, 5, 6, 7 executed on distinct nodes A, B, C. Again, individual copies of the buffer 9 are sent out from the sending component 5 to each one of a number of various components 3, 6, 7 executed on distinct nodes B, C.

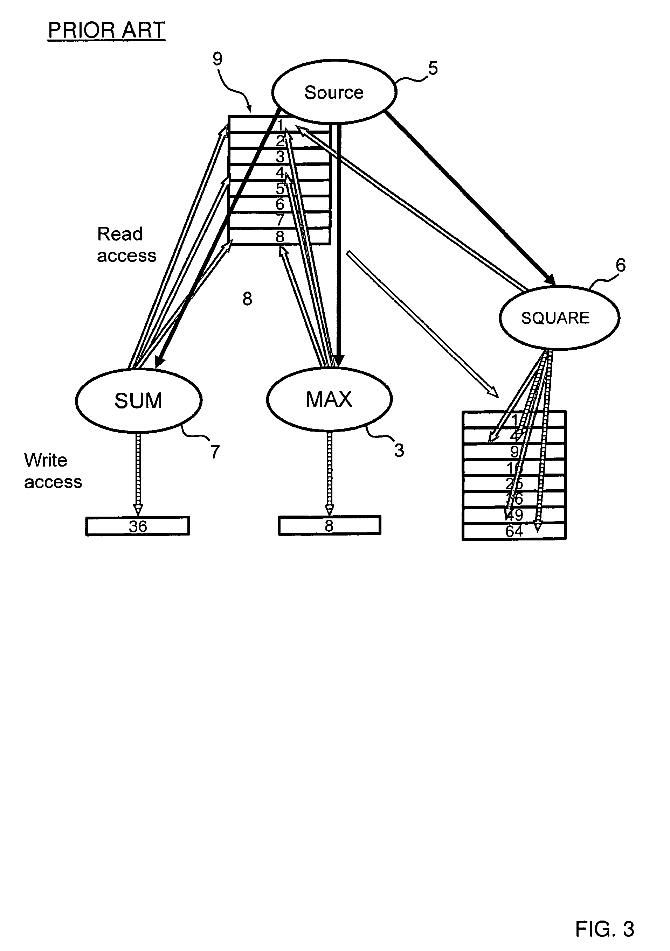

Copy-on-write (COW) is a well-known principle in prior art memory management, which enables the efficient sharing of data buffers 9 by multiple processes executed simultaneously in a multi-core multitasking environment (Fig. 3). While each process can individually read the content of a buffer 9, a private copy is generated by another process only if a write operation is performed, in order to keep memory of the other processes consistent. Unfortunately, COW is limited as soon as a single node is left. With COW being a feature of a memory management unit, it is limited to the node on which the physical memory resides, meaning that it cannot be employed in a distributed system. Here, remote objects and remote method invocation, respectively, could overcome the barrier of a single system, but high synchronization effort as well as exchange of multiple messages between remote processes, either for object relocation or access, is mandatory. This results in processing overhead to generate those messages and in execution delay as a number of successive messages has to be sent over a potential bottleneck network. Some networks provide multicast messages, which can be used for efficient transport of messages from one source to multiple target hosts, but those mechanisms do not take COW into account and are complex in handling.

It is therefore desirable to be able to access a method for sending messages within a cloud computing environment with an optimized forward data flow for passing messages.

### DESCRIPTION

It is therefore an object of the invention to provide a method for sending messages within a cloud computing environment with an optimized forward data flow for passing messages.

To overcome the limitations regarding an allocatable communication capacity, an amount of CPU cycles available for processing, and a deployment of processing functions based on their maximum requirements to provide a given service quality, a distributed cloud computing environment will be proposed herein, based on lightweight execution containers, in which media processing functionality can be dynamically placed. In an ideal setting, the application programmer would experience the cloud as a single instance which automatically decides how functionality is deployed to the physical resources.

In one aspect of the present invention, the object is achieved by a method for sending a message that resides in a buffer between at least one out of a plurality of sending components and at least one out of a plurality of receiving components of a cloud computing environment comprising a plurality of nodes, wherein the sending components and the receiving components are executable on the nodes. The method comprises steps of
(a) adding a unique content identifier to the message to provide unique identification for the message;
(b) generating a receiver list comprising components that are allowed to use the message; and
(c) forwarding a buffer pointer to each component of the receiver list for enabling further handling of the message.

The phrase "message", as used in this application, shall be understood particularly as contents of a data buffer and may comprise header data in addition. In particular, a message may be free of any address information.

The phrase "sending component", as used in this application, shall be understood particularly as a component that is intended to send the message. The phrase "receiving component", as used in this application, shall be understood particularly as a component that is intended to receive or to be granted access to the message.

With a suitable embodiment of this method, an optimized demand of data flow for passing messages can be accomplished.

Preferably, the address information may be added in a separate step by a function running in an execution environment of a node.

According to a preferred embodiment, the at least one sending component is executed on a first node and the at least one receiving component is executed on a second node that is distinct from the first node, and the method further comprises a step of
(a1) sending a single copy of the buffer comprising the message and the unique content identifier to the second node.

Thereby, a reduced demand of data flow for passing messages between components that are executed on distinct nodes can be achieved. Preferably, step (a1) may be carried out between step (a) and step (b) of the method.

In a further preferred embodiment, at least one sending component and at least two distinct receiving components are executed on one of the nodes, and the method further comprises a step of
(d1) adding the receiving components to the receiver list.

In this manner, copying the message can be omitted and the required flow of data can be reduced.

In another preferred embodiment, at least two distinct sending components are executed on one of the nodes and at least two distinct receiving components are executed on nodes distinct from the node, the method further comprising a step of
(d2) transferring the content identifier without the message if it was detected that the message was sent to the nodes before; and
(e) validating the content identifier and adding receiving components of the message to the receiver list.

Thus, by not generating a new message with the complete content which was already sent before to the destination node, and only transferring the content identifier instead, the data flow for passing messages can be further reduced and the forward data flow can be further optimized.

Preferably, the method further comprises a step of
(d3) retransmitting the message to the nodes if it was detected that the message was sent before and has timed out, or was sent before and was released by the receiving component.
By this, the required data flow for passing messages is kept at a minimum while ensuring the desired functionality.

In yet another preferred embodiment, at least two distinct sending components of the message are executed on two distinct nodes, and one receiving component is executed on a third node that is distinct from the two distinct nodes; the method further comprising a step of
(f) based on the content identifier, detecting that the message was sent to the receiving component; and
(g) preventing that a duplicate of the message is send to the receiving component.

Thereby, messages can be passed in an effective way without sending unnecessary duplicates, further optimizing the forward data flow.

It is another object of the invention to provide a cloud execution environment for message passing, in particular in a media cloud computing environment comprising
- a plurality of sending components,
- a plurality of receiving components,
- a plurality of messages, each message residing in a buffer;
- a plurality of nodes;
wherein the sending components and the receiving components are executable on the nodes; and the cloud execution environment comprises
- a service router, provided for identifying for each message potential recipients and their location in the cloud environment;
- a network interface handling unit, provided for adding a unique content identifier to a message of the plurality of messages to provide unique identification for the message;
- a component scheduling unit, provided for forwarding a buffer pointer to each component of the receiver list for enabling further handling of the message; and
- a queue management unit, provided for generating receiver lists of component allowed to use a message of the plurality of messages.

Hereby, a cloud execution environment with an improved forward data flow for passing messages can be provided, and cloud environment resource capacity can be freed for other desired purposes.

In another aspect of the invention, a software module for controlling an execution of steps of at least one embodiment of the disclosed methods or a variation thereof is provided, wherein the software module is executable by a cloud execution environment.

These and other aspects of the invention will be apparent from and elucidated with reference to the embodiments described hereinafter.

### BRIEF DESCRIPTION OF THE DRAWINGS

In the drawings:
Fig. 1 schematically illustrates an embodiment of a prior art method of explicit message copying between components executed on a single node;
Fig. 2 illustrates prior art message copying between components executed on distinct nodes;
Fig. 3 illustrates the prior art copy-on-write (COW) principle in memory management;
Fig. 4 schematically illustrates an embodiment of the method in accordance with the invention;
Fig. 5 schematically illustrates another embodiment of the method in accordance with the invention with components executed on two distinct nodes;
Fig. 6 shows yet another embodiment of the method in accordance with the invention with components executed on three distinct nodes;
Fig. 7 schematically shows a media cloud execution environment in accordance with the invention; and

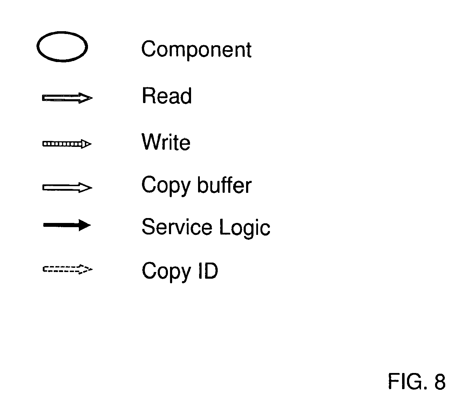

Fig. 8 provides a legend of types of steps illustrated in Figs. 1 to 7.

### DETAILED DESCRIPTION

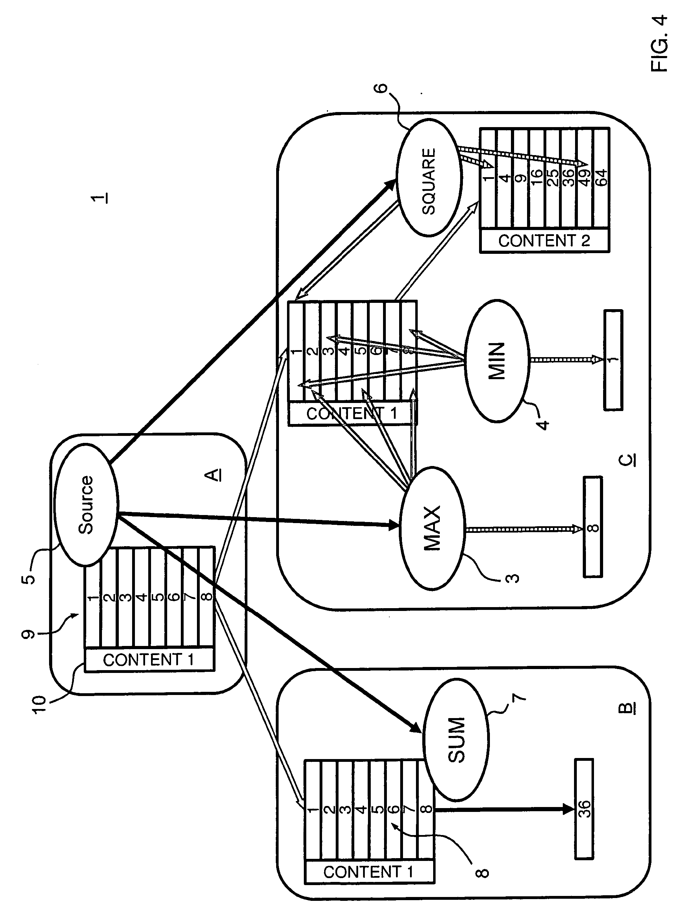

Fig. 4 schematically illustrates an embodiment of the method in accordance with the invention. Three nodes A, B, C out of a plurality of nodes of a cloud computing environment 1 are shown, each node A, B, C comprising service components 3-7. It shall be understood that the cloud computing environment 1 comprises a plurality of nodes, out of which just the three nodes A, B, C are displayed in Fig. 4. Further, the cloud computing environment 1 shall be understood to comprise a plurality of components, out of which five components 3-7 are exemplarily described in detail. The service components 3-7 are executable on the nodes A, B, C. They are designed as small single functionality software entities that receive input messages 8, each message 8 residing in a buffer 9, provide a computing function and send message(s) 8 to a cloud execution environment service router.

A component 5 that is executed on the first node A needs to transfer a message 8 to receiving component 7 that is executed on the second node B that is distinct from the first node A.

In a first step, during a time period of the component 5 allocating the buffer 9, a unique content identifier 10 is added to the message 8 to provide unique identification for the message 8.

Component 7 is the only receiving component that is executed on the second node B. Thus, in a second step, a single copy of the buffer 9 comprising the message 8 and the unique content identifier 10 is send to the second node B.

On the third node C, two receiving components 3, 6 are being executed. In a next step, another single copy of the buffer 9 comprising the message 8 and the unique content identifier 10 is send to the third node C. Instead of transmitting a new private copy to each of the two receiving components 3, 6 in node C, all the receiving components 3, 6 will be served by the single copy of the message 8.

Framework functionality belonging to the node in which the receiving components 3, 6 are executed takes the message 8 and generates a local buffer 9 holding the copy of the message 8 with the identical content identifier 10. A receiver list is generated in another step which comprises the components 3, 6 that are allowed to use the message 8. Buffer pointers are forwarded to all components 3, 6 of the receiver list for enabling further handling of the message 8.

If a third receiving component 4 that is distinct from the other two receiving components 3, 6 is executed on the third node C, in another step of the method the third receiving component 4 is added to the receiver list.

Each receiving component 3, 4, 6 is registered as user of the message 8 provided by a sending component 5. Write access to the message 8 by one of the receiving components 3, 4, 6 results in creation of a new local copy of the message 8 that is owned by the receiving component 3, 4, 6 which performed the write on the message 8, including a new content identifier 10'.

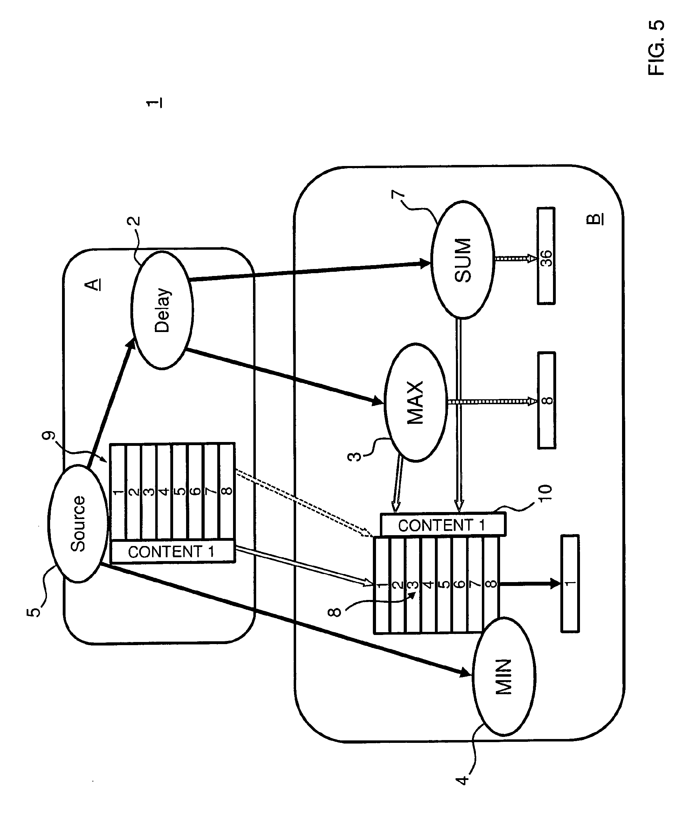

In the configuration illustrated in Fig. 5, two distinct sending components 2, 5 are executed on the first node A and three distinct receiving components 3, 4, 7 are executed on the second node B which is distinct from the first node A.

The message 8 had been sent from the sending component 5 executed on the first node A to the receiving component 4 executed on the second note B. As described earlier, a single copy of the buffer 9 comprising the message 8 and the unique content identifier 10 is send to the second node B. The second sending component 2 intends to send the same message 8 to the distinct receiving components 3, 7 that are executed on the second node B. In this case, it will be detected that the message 8 was sent to the second node B before, and the content identifier 10 will be transferred to the second node B without the message 8 in the next step.

If it was detected that the message 8 that was sent out before has timed out or was released by the last receiving component, the message 8 is retransmitted to the second node B as the next step.

In the following step, the content identifier 10 is validated and the receiving components 3, 7 are added to the receiver list.

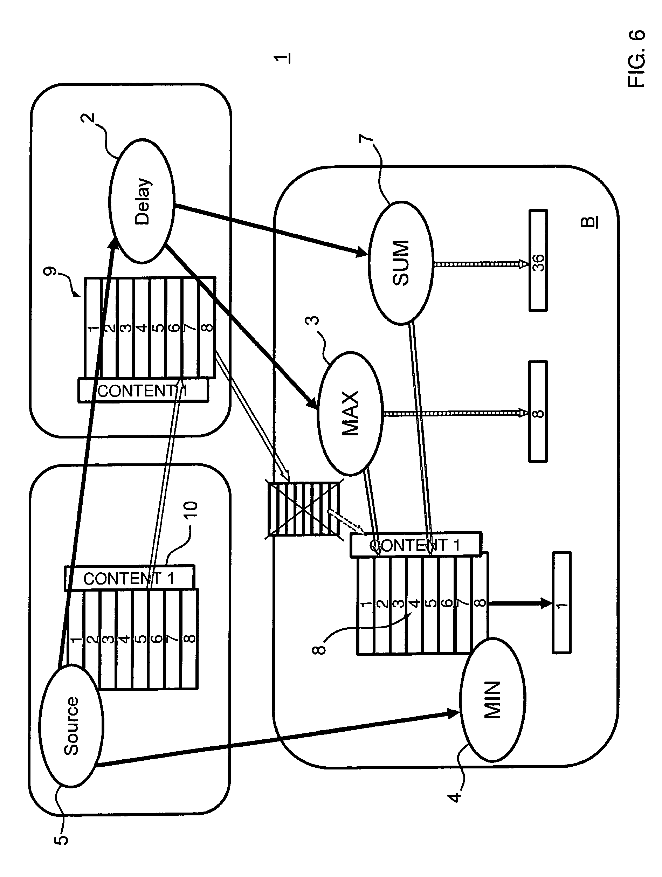

In the configuration shown in Fig. 6, two distinct sending components 2, 5 are executed on two distinct nodes A, B, and three distinct receiving components 3, 4, 7 are executed on a third node C which is distinct from the two distinct nodes A, B.

The sending component 5 executed on the first node A had sent the message 8 to the receiving component 2 executed on the second node C and to the receiving component 4 executed on the third node C. As described earlier, a single copy of the buffer 9 comprising the message 8 and the unique content identifier 10 had been sent to the second node B and the third node C, respectively. The component 2 then intends to send the same message 8 to the distinct receiving components 3, 7 that are executed on the third node C. In this case, based on the content identifier 10, it will be detected that the message 8 was sent to the third node C before, and the sending of a duplicate of the message 8 is prevented. Instead, as described earlier, the receiving components 3, 7 executed on the third node C are added to the receiver list for this message 8, and buffer pointers are forwarded to each component of the receiver list for enabling further handling of the message 8.

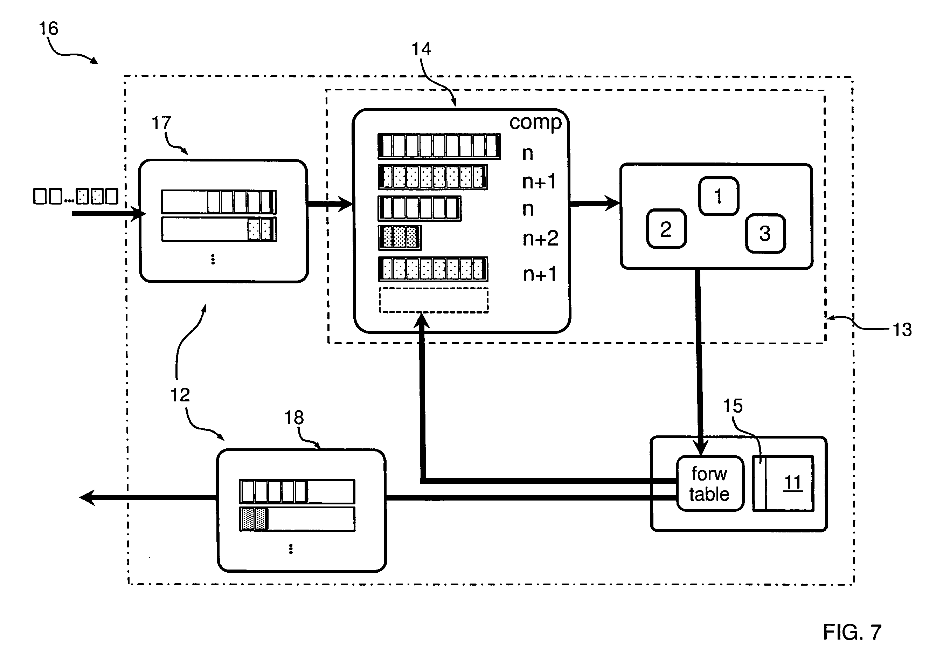

Fig. 7 illustrates a first media cloud execution environment in a schematic manner. It shall be understood that each node of the media cloud computing environment 1 is equipped with such a media cloud execution environment. The media cloud computing environment 1 comprises a plurality of sending components and a plurality of receiving components, wherein the components 2-7 are executable on the nodes A, B, C, and a plurality of messages, each message 8 residing in a buffer 9.

The first media cloud execution environment comprises a component scheduler 13, a service router 11, a queue management unit 14, and a network interface handling unit 12 which comprises a receive part 17 and a sending part 18. Service components are small single functionality software entities that receive input messages (buffers), provide a computing function and send message(s) to the execution environment service router 11. The service router 11 will identify for each message 8 the potential receiving components and their location in the cloud computing environment 1. If the receiving component is executed on the same node A, B, C, the buffer 9 will be added to the queue management unit 14, else the buffer 9 will be transferred to the sending part 18 of the network interface handling unit 12. The network interface handling unit 12 is provided for adding a unique content identifier 10 to the message 8 of the plurality of messages to provide unique identification for the message 8. Further, the network interface handling unit 12 is provided to identify the receiving node and validate if the message 8 has been transferred before. If not, the buffer 9 and identification numbers of the receiving components are encapsulated into a network message (e.g. one or multiple UDP, or TCP packets) and are sent to the receiving node.
A receive part 17' of a network interface handling unit 12' of a second media cloud execution environment of the receiving node will receive the message 8, create a new buffer 9' and transfer the new buffer 9' and a receiver list to a queue management 14' of the second media cloud execution environment. Queue management 14' is responsible for maintaining a list of buffers 9' and a corresponding access control list. On write access to one of the buffers 9', a private copy is generated for the component performing the write operation, in case there are other valid readers. If the writing component is a single allowed component, a new content identifier 10' is assigned, as no other component is corrupted by any modifications. The component scheduler 13 schedules those components for which it has incoming messages 8. When a component gets scheduled, the component scheduler 13 passes pointers of the respective message buffer 9 to the receiving components on the receiver list for enabling further handling of the message 8, and initiates its execution.

For the purpose of controlling the steps of the method as described before, the cloud execution environments of each node of the media cloud computing environment is furnished with a software module 15, wherein the steps are converted into a program code that is executable by every cloud execution environment.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. A method for sending a message (8) that resides in a buffer (9) between at least one out of a plurality of sending components and at least one out of a plurality of receiving components of a cloud computing environment (1) comprising a plurality of nodes (A, B, C), wherein the sending components and the receiving components are executable on the nodes (A, B, C), the method comprising steps of:
(a) adding a unique content identifier (10) to the message (8) to provide unique identification for the message (8);
(b) generating a receiver list comprising components (2-7) that are allowed to use the message (8); and
(c) forwarding a buffer pointer to each component (2-7) of the receiver list for enabling further handling of the message (8).

2. The method for sending a message (8) as claimed in claim 1, wherein the at least one sending component is executed on a first node (A) and the at least one receiving component is executed on a second node (B, C) that is distinct from the first node (A), the method further comprising a step of
(a1) sending a single copy of the buffer (9) comprising the message (9) and the unique content identifier (10) to the second node (B, C).

3. The method for sending a message (8) as claimed in claim 1, wherein at least one sending component and at least two distinct receiving components are executed on one of the nodes (A, B, C), the method further comprising a step of
(d1) adding the receiving components to the receiver list.

4. The method for sending a message (8) as claimed in in claim 1, wherein at least two distinct sending components are executed on one of the nodes (A) and at least two distinct receiving components are executed on nodes (B, C) distinct from the node (A), the method further comprising a step of
(d2) transferring the content identifier (10) without the message (8) if it was detected that the message (8) was sent to the nodes (B, C) before; and
(e) validating the content identifier (10) and adding receiving components to the receiver list.

5. The method for sending a message (8) as claimed in in claim 4, further comprising a step of
(d3) retransmitting the message (8) to the nodes (B, C) if it was detected that the message (8) was sent before and has timed out, or was sent before and was released by the receiving component.

6. The method for sending a message (8) as claimed in in claim 1, wherein at least two distinct sending components of the message (8) are executed on two distinct nodes (A, B), and one receiving component is executed on a third node (C) that is distinct from the two distinct nodes (A, B); the method further comprising a step of
(f) based on the content identifier (10), detecting that the message (8) was sent to the receiving component; and
(g) preventing that a duplicate of the message (8) is send to the receiving component.

7. A cloud execution environment for message passing, in particular in a media cloud computing environment (1) comprising
- a plurality of sending components,
- a plurality of receiving components,
- a plurality of messages, each message (8) residing in a buffer (9);
- a plurality of nodes (A, B, C);
wherein the sending components and the receiving components are executable on the nodes (A, B, C); the cloud execution environment comprising
- a service router (11), provided for identifying for each message (8) potential receiving components and their location in the cloud computing environment (1);
- a network interface handling unit (12), provided for adding a unique content identifier (10) to a message (8) of the plurality of messages to provide unique identification for the message (8);
- a component scheduler (13), provided for forwarding a buffer pointer to each component of the receiver list for enabling further handling of the message (8); and
- a queue management unit (14), provided for generating receiver lists of components allowed to use a message (8) of the plurality of messages.

8. The cloud execution environment as claimed in claim 7, wherein the network interface handling unit (12) is provided for detecting if the message (8) was sent before.

9. A software module (15) for controlling an execution of steps of the method as claimed in any of claims 1 to 6, wherein the steps are converted into a program code that is executable by a cloud execution environment as claimed in any of claims 7 and 8.
